(19)

Europäisches
Patentamt
European
Patent Office
Office européen
des brevets

(11) EP 3 096 575 B1

(12) **EUROPEAN PATENT SPECIFICATION**

(45) Date of publication and mention
of the grant of the patent:
**10.01.2018 Bulletin 2018/02**

(51) Int Cl.:
*H04W 72/00* *(2009.01)*   *H04W 4/02* *(2018.01)*
*H04W 4/06* *(2009.01)*

(21) Application number: **15305755.9**

(22) Date of filing: **20.05.2015**

(54) **METHOD, SYSTEM AND COMPUTER-READABLE MEDIUM FOR UPDATING A BROADCAST AREA**

VERFAHREN, SYSTEM UND COMPUTERLESBARES MEDIUM ZUR AKTUALISIERUNG EINES RUNDFUNKBEREICHS

PROCÉDÉ, SYSTÈME ET SUPPORT LISIBLE PAR ORDINATEUR POUR LA MISE À JOUR D'UNE ZONE DE DIFFUSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.11.2016 Bulletin 2016/47**

(73) Proprietor: **ALCATEL LUCENT
92100 Boulogne-Billancourt (FR)**

(72) Inventors:
• **Sayadi, Bessem
91620 NOZAY (FR)**
• **Kerboeuf, Sylvaine
91620 NOZAY (FR)**

(74) Representative: **Berthier, Karine et al
Alcatel-Lucent International
Patent Business
Site Nokia Paris Saclay
Route de Villejust
91620 Nozay (FR)**

(56) References cited:
**EP-A1- 2 456 238        WO-A1-2008/141305
WO-A1-2011/026499**

**Description**

FIELD OF INVENTION

The present subject matter relates to the updating of a broadcasting area in order to adapt the broadcasting area to the displacement of the user equipments served by this broadcast area. In a non limiting example the broadcast area can be a MBMS (Multimedia Broadcast Multicast Services) area or eMBMS (enhanced Multimedia Broadcast Multicast Services) area.

BACKGROUND

Mobile data traffic has been growing at an exponential rate with traffic volume doubling every year and with some predicting more than 18-fold increase in data traffic in five years. A significant portion of which is video on demand (non-interactive, pre-recorded content) with more than 25% coming from Youtube alone.

To respond to this growing trend, small cells networks constitute an interesting alternative to meet the above-mentioned objectives. Small cells stand for cells of small size (generally about 100 or 200 m). They target to deliver high per-user data rates uniformly across the coverage area and provide greater overall throughput via higher spatial reuse. Adding to that, they can be operated and can cover both indoor and outdoor environments.

On the other hand, an efficient mean to deliver massively video contents to a large population relies on broadcast delivery solution such as MBMS, eMBMS etc. Such solutions are well suited for popular live or scheduled contents, or in venue video events (like stadium coverage).

The operator designates in advance a set of locations where the broadcast could be activated, for example a stadium or a mall. The operator defines a set of MBMS Single Frequency Network area (MBSFN). On top of MBSFN area, the network defines an MBMS service area where a MBMS service is broadcast.

One MBMS service area consists of one or more cells and corresponds to one or more MBSFN area. The BM-SC (Broadcast Multicast Service Center) informs network entities about the MBMS service area corresponding to the session. The network entities can use the MBMS service area to determine the eNBs to which the corresponding MBMS service should be distributed on the network side through the notion of MBMS area.

The idea of the broadcast is interesting to save radio resources. The network will send once the information and many people can consume it rather than sending it individually to each consumer.

WO2008/141305 A1 discloses a method for creating a moving broadcast group for car-2-car communication wherein speed, position, direction, acceleration and state is considered to determine a center of the group and to adjust the span of the group.

SUMMARY

This summary is provided to introduce concepts related to the updating of a broadcasting area in order to adapt the broadcasting area to the displacement of the user equipments served by this broadcast area.

In one implementation a method is described. The aim of this method is to determine at least one new broadcast area, the new broadcast area containing a plurality of cells and serving a plurality of user equipments, the user equipments being organized within a plurality of groups. The method comprises the following steps realized for at least one of the group a first step of determining a principal direction depending of directions of the user equipments of the group, a second step of determining a dispersion of the directions, depending of the directions of the users equipments of the group and of the principal direction, a third step of determining a center, depending of positions of the user equipments of the group, a fourth step of determining a geographical area; the geographical area being centered on the center and the geographical area having a first extension, along the principal direction, this first extension depending of the speeds of the user equipments of the group and the geographical area having a second extension, along a direction perpendicular to the principal direction, this second extension depending of the dispersion and the speeds of the user equipments of the group. The method also comprises a fifth step of determining the new broadcast area, as being coverage areas of cells overlapping the geographical area.

In another implementation a system is described. The system is configured to update a broadcast area containing a plurality of cells and serving a plurality of user equipments, the user equipments being organized within a plurality of groups. The system comprises a first determination module configured to determine a principal directions depending of directions of the user equipments of the group, a second determination module configured to determine a dispersion depending of the directions of the users equipments of the group, a third determination module configured to determine a center, depending of positions of the user equipments of the group, a fourth determination module configured to determine a geographical area; the geographical area being centered on the center and the geographical area having a first extension, along the principal direction, this first extension depending of the speeds of the user equipments of the group and the geographical area having a second extension, along a direction perpendicular to the principal direction, this second extension depending of the dispersion and the speeds of the user equipments of the group. The system also comprises a fifth determination module configured to determine the new broadcast area, as being coverage areas of cells overlapping the geographical area.

In another implementation a computer-readable medium is described. The computer-readable medium has embodied thereon a method for updating a broadcast area containing a plurality of cells and serving a plurality of user equipments, the user equipments being organized within a plurality of groups. The method comprises a first step of determining a principal directions depending of directions of the user equipments of the group, a second step of determining a dispersion depending of the directions of the users equipments of the group, a third step of determining a center, depending of positions of the user equipments of the group, a fourth step of determining a geographical area; the geographical area being centered on the center and the geographical area having a first extension, along the principal direction, this first extension depending of the speeds of the user equipments of the group and the geographical area having a second extension, along a direction perpendicular to the principal direction, this second extension depending of the dispersion and the speeds of the user equipments of the group. The method also comprises a fifth step of determining the new broadcast area, as being coverage areas of cells overlapping the geographical area.

BRIEF DESCRIPTION OF THE FIGURES

The detailed description is given with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Figure 1 presents a first embodiment of the method object of the present subject matter

Figure 2 presents a second embodiment of the method object of the present subject matter

Figure 3 presents a third embodiment of the method object of the present subject matter

Figure 4-a presents an embodiment of the step 201 of classifying the user equipments according to their speed

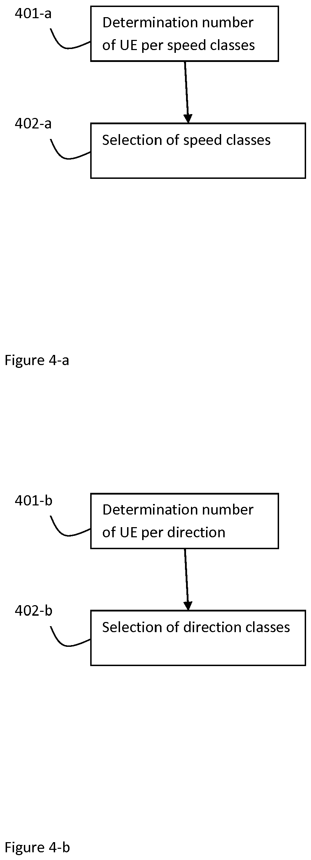

Figure 4-b presents an embodiment of the step 202 of classifying the user equipments according to their direction

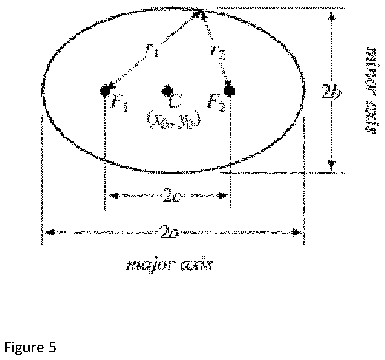

Figure 5 presents an ellipse obtained in an embodiment of the fourth step

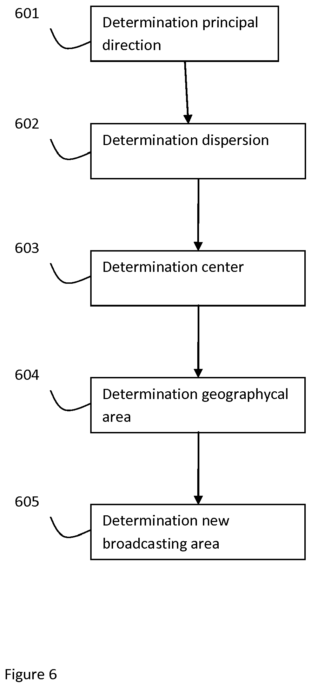

Figure 6 presents an embodiment of the system object of the present subject matter

In the present document, the word "exemplary" is used herein to mean "serving as an example, instance, or illustration." Any embodiment or implementation of the present subject matter described herein as "exemplary" is not necessarily to be construed as preferred or advantageous over other embodiments.
It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

DESCRIPTION OF EMBODIMENTS

The embodiments of the present subject matter apply to the broadcast delivery of contents within different types of broadcasting area, for example MBMS or eMBMS. Broadcast delivery allows a single data stream to reach multiple users simultaneously. Most importantly, it avoids separately sending redundant content to multiple users. For this reason, broadcast delivery of popular multimedia content is an attractive way to optimize network resources and wireless capacity. In addition, it is a good way to remain the user experience good as the number of users receiving content from broadcast delivery ranges from a small number to high number. By broadcasting area we mean a set of cells of a cellular network that are dedicated to the transmission of the same data flow, for example a media content such us video, image, audio or a file, to different user equipments. The 3GPP specification TS26.346 comprises numerous use case of broadcasting area.

In an embodiment of the present subject matter, the context awareness on the utilizing context information in a real-time manner based on network, devices, applications, and the user behavior is captured and used in the determination of the MBSFN area. For example, we can cite the velocity information which is critical information that should be considered when MBSFN area is updated.

One embodiment of the present subject matter is a method to leverage the previously described limitation by allowing the MBSFN area to be dynamically updated during the session in order to cover the user equipments during the displacement of the user equipments.

In other words the idea is to make the MBSFN area dynamic according to the user density (consuming the broadcast service) and their mobility/trajectory in the network in order to deliver the best Quality of Experience (QoE) for the most users and in the same time optimize the radio resources.

In order to more precisely explain the purpose of the embodiments of the present subject matter we can refer to the following example:

Assume we are in a campus where many users are consuming a broadcasted content (e.g. the final of world Cup Football). These users are connected to a pre-deployed and pre-defined MBSFN area. Without using the embodiments of the present subject matter, when these users are leaving the campus and when most of them are moving in one direction (e.g. taking the public transport), most of the users will be detached from the MBSFN area and their sessions will be switched to unicast or Packet-switched Streaming Service (PSS) delivery. This way of working follows the specification described in 3GPP TS 23.246 and 3GPP TS 26.346. In contrary when using the embodiments of the present subject matter, the MBFSN area will be adapted to the movement of the user equipments and so the user equipments could stay within the broadcasting area. Using the embodiments of the present subject matter, it results that the network would not have to support most of the users through, and at the end save a lot of radio resources.

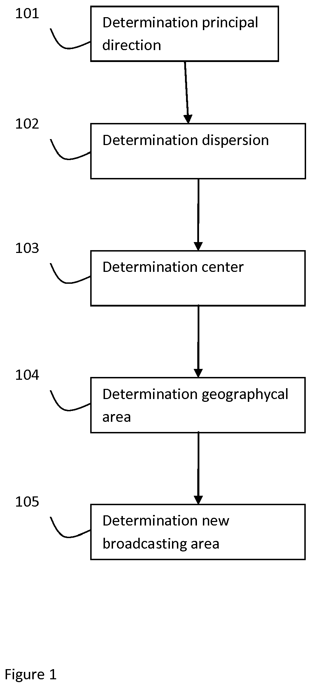

One embodiment of the present subject matter is a method describes figure 1. This method allows the determination of at least one new broadcast area. The broadcast area contains a plurality of cells and serves a plurality of user equipments. The user equipments are organized within a plurality of groups. The method comprises the following steps realizes for at least one of the group:

> a first step 101 of determining a principal direction depending of directions of the user equipments of the group,
> a second step 102 of determining a dispersion of the directions, depending of the directions of the user equipments of the group and of the principal direction,
> a third step 103 of determining a center depending of positions of the user equipments of the group,
> a fourth step 104 of determining an geographical area;

>> the geographical area being centered on the center and
>> the geographical area having a first extension, along the principal direction, this first extension depending of the speeds of the user equipments of the group and
>> the geographical area having a second extension of the geographical area, along a direction perpendicular to the principal direction, this second extension depending of the dispersion and the speeds of the user equipments of the group,

The method also comprises a fifth step 105 of determining a new broadcast area, as being coverage areas of cells overlapping the geographical area.

Numerous publications and methods are known by the person having ordinary skill in art to extract the speed and direction of an user equipment, for example the covariance based methods. These methods consist in estimating the speed by analyzing the characteristics of the received signal. The Doppler frequency is estimated via the computation of the covariance function of the received signal. The radial speed of users is then derived. Examples of these algorithms are described in the publication of Rosa Zheng Yahong and Xiao Chengshan. Mobile speed estimation for broadband wireless communications over rician fading channels, published IEEE Transactions On Wireless Communications, page 8, jan 2009. Other documents where direction and speed estimation are tackled are for example the publication of Zajic, A.G., Estimation of Mobile Velocities and Direction of Movement in Mobile-to-Mobile Wireless Fading Channels, published IEEE Transactions on Vehicular Technology, vol. 61, Issue 1, pp. 130-139.

The method object of the present subject matter allows the determination of a broadcast area of the right size, when deploying a broadcast service for example a MBMS service. Thanks to the embodiments of the present subject matter, the broadcast area is adapted dynamically according to the mobility of user equipments. It adapts the location and the size of the broadcast area dynamically according to the user's mobility and behavior. For example, for in-venue event the broadcast area coverage is limited to the stadium area during the event and at the end of the event when people flood leave the stadium, the broadcast area moves with the people flows.

In other words the basic idea of this embodiment is to adapt the broadcasting area according to the context of the subscribed users and its evolution. Here, we focus mainly on the terminal speed and direction. This method allows the controlling of the joining/leaving of cells dynamically to the broadcasting area according to the trajectory of the users.

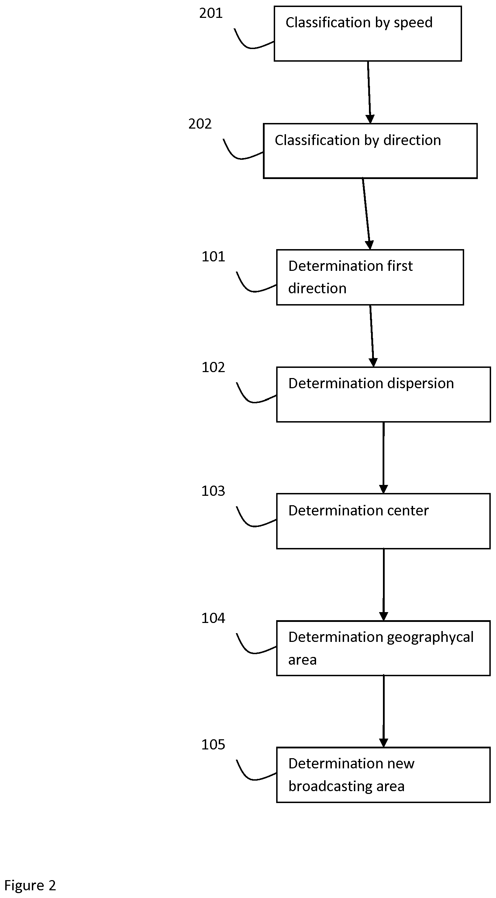

In another embodiment describes figure 2 the method also comprises:

a step 201 of classifying the user equipments according to their speed within a plurality of speed classes, each speed class being associated to a range of speeds and containing the user equipments with speed of displacement within the range of speeds,

a step 202 of classifying the user equipments according to their direction within a plurality of direction classes, each direction class being associated to a range of directions and containing the user equipments with direction of displacement within the range of directions,

wherein each group is associated to a couple constituted of a speed class and a direction class and the user equipments of a group are the user equipments classify within the associated speed class and direction class.

In the previously described embodiment some classifications method are applied. The aim is to consider user equipments with direction and/or velocity that are in the same range, in order to obtain a broadcasting area containing user equipments that are involved in the same movement.

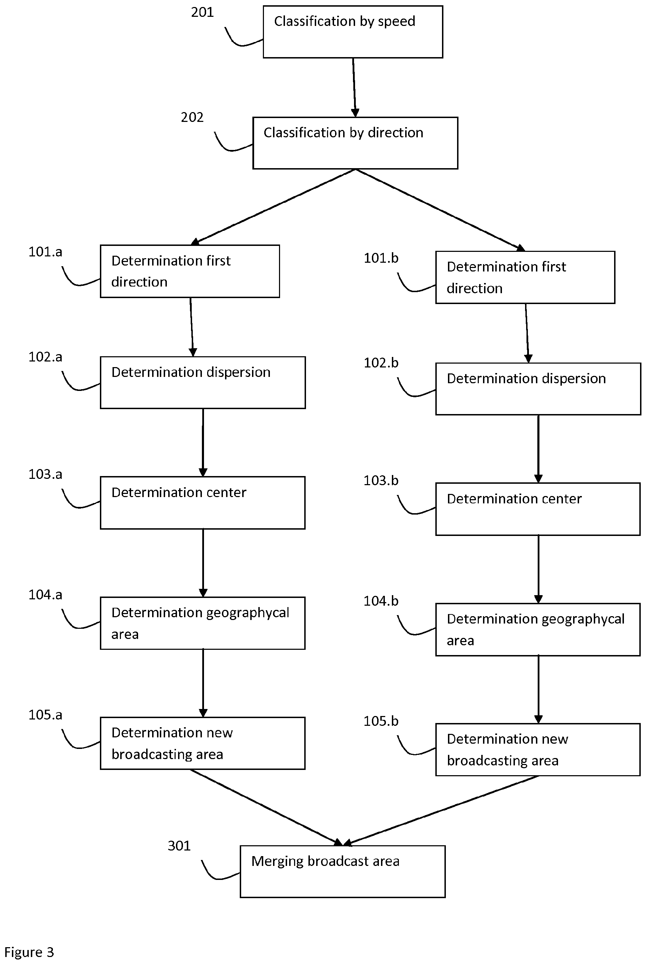

In another embodiment describes figure 3 the method comprises the classification step 201 and 202 of figure 2. In the method object of this embodiment the steps 101, 102, 103, 104, 105 are realized for at least two groups associated to two different couples constituted of a direction class and a speed class. This embodiment can also comprise a step 301 of merging at least two new broadcast areas. This merging can be realized by, after determining the area of the broadcast, selecting all the cells overlapping with this area. So you have a list of cells (referenced by their Cell_Id) that cover a broadcasting area. You apply the same thing for the others broadcast areas, you obtain a new set of cells. The merging consists in union of all the obtained set of cells.

In other words, in the figure 3, several broadcast areas can be determined, in order to have a plurality of broadcast areas. Each broadcasting area more precisely follows the movement of group of user equipments.

In other words, within the methods of the present subject matter, each user notifies the network his joining to the broadcasted content in a predefined broadcast area, for example a MBSFN area. The network collects in a database all the information related to the speed and the direction. After that the method examines the context of the different terminals consuming same broadcasted content through the broadcast area, for example the velocity, principal direction, stationnarity of the terminal trajectory. After that the method classifies the user equipments according to their speed. The following step is a direction classification step. In this step and for each speed class, the method determines the direction of the user equipments of the speed class. For that, the classification method is run again using different parameters to compute the direction of their trajectory. The next step is the determination of the broadcasting area, this is done by finding the different cell which should be part of the new broadcast area for each selected couple of speed and direction classes, we determine the new broadcast area boundary. The next step is a step wherein each cell in the new broadcast area will join the new broadcast area. The cell not yet belonging to the broadcast area will leave the broadcast area. The method is iterative and the method is restarted by doing again a step of collecting the new data of the users in each broadcast area during a predefined time interval Ts.

In an embodiment of the present subject matter and if it results, after running the method for updating a broadcast area, that two or more new separate broadcast areas are created then the method will be run independently on each broadcast area for the next time interval. This situation is possible if we have distinct sub-groups in the original broadcast area.

In an embodiment of the present subject matter, the method comprises a step of examination and determination of the user equipments velocity as well as the evolution of this trajectory in a periodic manner. The aim is to determine the speed and the direction of the user equipments; this can be achieved through different methods. Different approaches can applied for wireless networks for the localization of the terminal and thus the calculation of their velocity and direction:

- Using GPS (Global Positioning System) for example as described within the article of S. Omar, C. Rizos S. "Incorporating GPS into Wireless Networks: Issues and Challenges" published during the 6th International Symposium on Satellite Navigation Technology Including Mobile Positioning & Location Services, 2003.

- Using TDOA (Time Difference Of Arrival) system as described within the article of Fredrik Gustafsson and Fredrik Gunnarsson, "Positioning using time-difference of arrival measurements", published during IEEE International Conference on Acoustics, Speech, and Signal Processing, 2003. Proceedings. (ICASSP '03).

- Other less precise methods can also be used. These other methods can inform on the terminal velocity at low precision (for example classification of the user among three classes: immobile, low velocity and high velocity, basing on received power measurements). This is for example described in the article of Salah-Eddine Elayoubi, Afef Ben Hadj Alaya-Feki, Emmanuelle Villebrun, Benoît Fourestié, "Wavelet analysis for velocity characterization in mobile networks". Presented during VTC Spring 2006 pages 793-797.

Numerous publications and methods are known by the person having ordinary skill in art to extract the speed and direction of an user equipment, for example the covariance based methods. These methods consist in estimating the speed by analyzing the characteristics of the received signal. The Doppler frequency is estimated via the computation of the covariance function of the received signal. The radial speed of users is then derived. Examples of these algorithms are described in the publication of Rosa Zheng Yahong and Xiao Chengshan. Mobile speed estimation for broadband wireless communications over rician fading channels, published IEEE Transactions On Wireless Communications, page 8, jan 2009. Other documents where direction and speed estimation are tackled are for example the publication of Zajic, A.G., Estimation of Mobile Velocities and Direction of Movement in Mobile-to-Mobile Wireless Fading Channels, published IEEE Transactions on Vehicular Technology, vol. 61, Issue 1, pp. 130-139.

An embodiment of the step 201 of classifying the user equipments according to their speed within a plurality of speed class, each speed class being a range of speeds, is presented in figure 4-a and comprises the following steps:

- a step 401-a of determining for at least one speed class a number of user equipments of the speed class,

- and a step 402-a of selecting the speed classes containing more user equipments than a first threshold.

By determining a number of user equipments of the speed class we mean determining the number of user equipments whose speed are within a speed range or interval of speeds associated to the speed class.

The aim of the step 401-a of determining a number of user equipments to each speed class is to determine the different classes of the terminals: immobile (eg: speed=0 km/h), pedestrian-like (eg: between 0 and 10 km/h) or vehicular (eg: >10km/h) etc. The method object of the present subject matter could determine different broadcasting areas adapted to each of the speed classes.

The aim of the step 402-a of selecting the speed classes containing a number of user equipments above a first threshold is to avoid taken into account speed classes with too few user equipments. In other words, the histogram values is comparing with a threshold, experimentally set-up, to determine the importance of a class in the decision. For example if the class contains 1% of the total number of user equipments associated to the broadcast area, it will not be considered in the algorithm.

In an embodiment of the determination step 401-a, 5 different speed classes are taken into account. These classes are the class 0 to 20 km/h, the class 20 km/h to 40km/h, the class 40 km/h to 60 km/h the class 60 km/h to 80km/h and the class 80 km/h and above.

In an embodiment of the selection step 401-b, the first threshold is 5% of the total number of user equipments associated to the broadcast area.

The example of this embodiment is only an illustration of how the method of this disclosure works. It is up to the operator to configure his preferences regarding the first threshold and the definition of the classes.

In an embodiment, presented figure 4-b, the step 202 of classifying the user equipments according to their direction within a plurality of direction class direction, comprises;

a step 402-a of determining, for at least one direction class a number of user equipments of the direction class;

and a step 402-b of selecting the direction classes containing more user equipments than a second threshold.

In an embodiment of the determination step 402-a, four direction classes are taken into account. First class is the interval 0 to pi/2, the second class is the interval pi/2 to pi, the third class is the interval pi to 3pi/2 and the fourth class is the interval 3pi/2 to 2pi.

In an embodiment of the selection step 402-b, the second threshold is 37% of the total number of user equipments associated to the broadcast area.

The example of this embodiment is only an illustration of how the method of this disclosure works. It is up to the operator to configure his preferences regarding the first threshold and the definition of the classes.

In an embodiment the first step 101 of determining a principal direction is configured to determine the principal direction as being a median of the directions of the user equipments of the group.

In an embodiment the first step 101 of determining a principal direction is configured to determine the principal direction as being a mean of the directions of the user equipments of the group.

In an embodiment the first step 101 of determining a principal direction is configured;

to classify the user equipments of the group within a set of subgroups, and to use the following equation;

$$theta\_i_{principal} = \sum_{j \in group} \frac{number\ of\ users\ in\ sub\ group\ j}{Total\ of\ users} theta\_j$$

In this equation *theta_i$_{principal}$* represents the principal direction of the group *i, j* represents one of the sub-group of the group *i, number of users in sub group j* represents the number of user of the sub group *j, Total of users* represents the total numbers of users consuming the broadcasted content, and *theta$_j$* represents the means direction of the users of the sub-group *j .*

In an embodiment of the present subject matter the second determination step 102 is also configured to determine the dispersion as being the variance of the direction of the directions of the user equipments of the group compared to the principal direction.

By variance we mean a function that measures how far a set of numbers is spread out compared to a given value. For example the variance can be determined using the following formula:

$$\sigma^2 = \frac{1}{N} \sum_{i=1}^{N} (x_i - \mu)^2$$

Wherein $\sigma$ is the variance, *N* is the number of element, $x_i$ is the value of the element *i* and $\mu$ is the mean of the set of elements, for example $\mu = \frac{1}{N} \sum_{i=1}^{N} x_i$ However the man ordinary skilled in the art knows some other way of expressing the variance and would easily apply this other ways within the present subject matter.

In an embodiment of the present subject matter the third determination step 103 is configured to determine the center as being the centroid of positions of the user equipments of the group.

By centroid we mean the arithmetic mean, also known as average, of the positions of all the user equipments of the group.

The figure 5 presents an ellipse; this ellipse is one of the geographical areas obtainable by one embodiment of the fourth step 104 of determining a geographical area. In this embodiment the first extension is calculated according to range of the speeds of the user equipments of the group following a simple rule: For high velocity, we set a long ellipse that tends to cover future positions of the terminals. In the contrary, for low velocity, we suppose that position of the terminal will not change a lot. Thus, we consider an ellipse with low major axis value. In this embodiment the second extension is calculated according to the dispersion of the directions of the user equipments of the group compared to the principal direction. If the dispersion is weak, it means that mostly of the users are in the same direction. In that case, the second extension should be small. Otherwise, it means that, users are moving in the same area/direction but with a lot of dispersion. In that case, we have to set up a large value for the second extension.

In this embodiment the fourth step 104 of determining a geographical area is configured to determine an ellipse; this ellipse is centered on the center , the first extension representing a major axis of the ellipse and the second extension representing a minor axis of the ellipse, and

with the first extension;

being equal to the diameter of the coverage of 4 cells if the speed of the user equipments is lower than 20 km/h,

being equal to the diameter of the coverage of 8 cells if the speed of the user equipments is comprised between 20 km/h and 40km/h,

being equal to the diameter of the coverage of 16 cells if the speed of the user equipments is comprised between 40 km/h and 60km/h,

being equal to the diameter of the coverage of 32 cells if the speed of the user equipments is comprised between 60km/h and 80km/h,

being equal to the diameter of the coverage of 32 cells if the speed of the user equipments is higher than 80km/h

with the second extension;

being equal to two times the cell diameter if the dispersion is lower than $\pi$/3;

being equal to the first extension if the dispersion is within the rang $\pi$/3 to $\pi$/4;

being equal to *ceil*(*a*/2) times the cell diameter, if the dispersion is within the rang $\pi$/4 to $\pi$/6;

being equal to *ceil*(*a*/3) times the cell diameter if the dispersion is upper than $\pi$/6;

wherein *a* is equal to the first extension and *ceil* is the ceiling function.

By ceiling function we mean a function that determines the smallest integer following a real number.

The diameter of the cell coverage depends on the type of deployments. In small cell deployments, the cell average is around 200m. In case of Macro cell, it is about 2 Km.

In an embodiment the determined geographical area is an ellipse, see figure 5. This ellipse is centered in *cx, cy,* the major axis of this ellipse is *a* and the minor axis of this ellipse is *b*. Each cell is characterized by the coordinates (*x, y*) of the center of her coverage area and If this coordinates respect the following equation;

$$(x - cx)^2/_{a^2} + (y - cy)^2/_{b^2} \leq 1$$

the cell is considered to be part of the broadcast area.

In other words, in the embodiment described above and by using the references of the figure 6, the minor axis is chosen according to the variance (*var*) of the directions of the user equipments to the principal direction. We can select the value of b following this rule

$$\text{if } var \geq \pi/3, b = a$$

$$\text{else}$$

$$\text{if } var \geq \pi/4, b = ceil(a/2)$$

$$\text{else}$$

$$\text{if } var \geq \pi/6, b = ceil(a/3)$$

$$\text{else } b{=}2{*}\text{cell diameter}$$

Regarding the major axis, this parameter can be calculated according to range of the speed of the user equipments using the following mapping function:

For velocity in [0, 20[, select a = 4 cell diameter
For velocity in [20, 40[, select a = 8 cell diameter
For velocity in [40, 60[, select a = 16 cell diameter
For velocity in [60, 80[, select a = 32 cell diameter
For velocity higher than 80, select a = 32 cell diameter

An embodiment of the present subject matter the method is implemented within a system comprising one or more processor(s), I/O interface(s), a memory coupled to the processor(s) and transmission means. The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

This system for updating a broadcast area containing a plurality of cells and serving a plurality of user equipments is presented figure 6. The user equipments are organized within a plurality of groups. The system comprises;

a first determination module 601 configured to determine a principal directions depending of directions of the user equipments of the group,

a second determination module 602 configured to determine a dispersion depending of the directions of the users equipments of the group,

a third determination module 603 configured to determine a center, depending of positions of the user equipments of the group,

a fourth determination module 604 configured to determine a geographical area;

the geographical area being centered on the center and

the geographical area having a first extension, along the principal direction, this first extension depending of the speeds of the user equipments of the group

the geographical area having a second extension, along a direction perpendicular to the principal direction, this second extension depending of the dispersion and the speeds of the user equipments of the group,

and a fifth determination module 605 configured to determine the new broadcast area, as being coverage areas of cells overlapping the geographical area.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

An embodiment of the subject matter is a computer program, configured to realize the method described figure 1. This method is dedicated for updating a broadcast area containing a plurality of cells and serving a plurality of user equipments. The user equipments are organized within a plurality of groups. The method comprises:

a first step 101 of determining a principal directions depending of directions of the user equipments of the group,

a second step 102 of determining a dispersion depending of the directions of the users equipments of the group,

a third step 103 of determining a center, depending of positions of the user equipments of the group,

a fourth step 104 of determining a geographical area;

the geographical area being centered on the center and
the geographical area having a first extension, along the principal direction, this first extension depending of the speeds of the user equipments of the group
the geographical area having a second extension, along a direction perpendicular to the principal direction, this second extension depending of the dispersion and the speeds of the user equipments of the group,

and a fifth step 105 of determining the new broadcast area, as being coverage areas of cells overlapping the geographical area.

## Claims

1. Method for determining at least one new broadcast area, the new broadcast area containing a plurality of cells and serving a plurality of user equipments, the user equipments being organized within a plurality of groups, the method comprising the following steps realized for at least one of the groups

a first step (101) of determining a principal direction depending of directions of the user equipments of the group,
a second step (102) of determining a dispersion of the directions, depending of the directions of the user equipments of the group and of the principal direction,
a third step (103) of determining a center, depending of positions of the user equipments of the group,
a fourth step (104) of determining a geographical area;

the geographical area being centered on the center and

the geographical area having a first extension, along the principal direction, this first extension depending of the speeds of the user equipments of the group and

the geographical area having a second extension, along a direction perpendicular to the principal direction, this second extension depending of the dispersion and the speeds of the user equipments of the group,

the method also comprising a fifth step (105) of determining the new broadcast area, as being coverage areas of cells overlapping the geographical area.

2. Method according to claim 1 also comprising two initial steps;

a step (201) of classifying the user equipments according to their speed within a plurality of speed classes, each speed class being associated to a range of speeds and containing the user equipments with speed of displacement within the range of speeds,

a step (202) of classifying the user equipments according to their direction within a plurality of direction classes, each direction class being associated to a range of directions and containing the user equipments with direction of displacement within the range of directions,

wherein each group is associated to a couple constituted of a speed class and a direction class and the user equipments of a group are the user equipments classify within the associated speed class and direction class.

3. Method according to claim 2 wherein the steps of claim 1 are realized for at least two groups associated to two different couples constituted of one of the speed classes and of the direction classes, the method also comprising a step (301) of merging at least two new broadcast areas in a merged broadcast area.

4. Method according to claim 2 or 3 wherein the speed classification step (201) also comprises;

a step (401-a) of determining for at least one speed class a number of user equipments of the speed class, and a step (402-a) of selecting the speed classes containing more user equipments than a first threshold.

5. Method according to claim 2 or 3 or 4 wherein the direction classification step (202) also comprises;

a step (401-b) of determining, for at least one direction class a number of user equipments of the direction class; and a step (402-b) of selecting the direction classes containing more user equipments than a second threshold.

6. Method according to claim 3 or 4 or 5 wherein the merging step (301) is also configured

to determine cells of the two new broadcast areas and to determine the merged broadcast area as a broadcast area containing the cells of the two new broadcast areas.

7. Method according to any of the previous claims wherein the first determination step (101) is also configured;

to determine the principal direction as being a median of the directions of the user equipments of the group or, to determine the principal direction as being a mean of the directions of the user equipments of the group or to determine the principal direction as being a mean of a minimal direction of the user equipments of the group and of a maximal direction of the user equipments of the group or to classify the user equipments of the group within a set of subgroups and to use the following equation;

$$theta\_i_{principal} = \sum_{j \in group} \frac{number\ of\ users\ in\ sub\ group\ j}{Total\ of\ users} theta\_j$$

In this equation *theta_i_principal* represents the principal direction of the group *i*, *j* represents one of the sub-group of the group *i*, *number of users in sub group j* represents the number of user of the sub group *j*, *Total of users* represents the total numbers of users served by the new broadcast area, and *theta_j* represents the means direction of the users of the sub-group *j* .

8. Method according to any of the previous claims wherein;

the second determination step (102) is also configured to determine the dispersion as being the variance of the direction of the directions of the user equipments of the group compared to the principal direction.

9. Method according to any of the previous claims wherein;
the third determination step (103) is also configured to determine the center as being the centroid of positions of the user equipments of the group.

10. Method according to any of the previous claims wherein;

the fourth determination step (104) is also configured to determine the geographical area forming an ellipse; this ellipse is centered on the center, the first extension representing a major axis of the ellipse and the second extension representing a minor axis of the ellipse and
with the first extension;

being equal to the diameter of the coverage of 4 cells if the speed of the user equipments is lower than 20 km/h, being equal to the diameter of the coverage of 8 cells if the speed of the user equipments is comprised between 20 km/h and 40km/h,
being equal to the diameter of the coverage of 16 cells if the speed of the user equipments is comprised between 40 km/h and 60km/h,
being equal to the diameter of the coverage of 32 cells if the speed of the user equipments is comprised between 60km/h and 80km/h,
being equal to the diameter of the coverage of 32 cells if the speed of the user equipments is higher than 80km/h

with the second extension;

being equal to two times the cell diameter if the dispersion is lower than $\pi/3$
being equal to the first extension if the dispersion is within the rang $\pi/3$ to $\pi/4$;
being equal to $ceil(a/2)$ times the cell diameter, if the dispersion is within the rang $\pi/4$ to $\pi/6$
being equal to $ceil(a/3)$ times the cell diameter if the dispersion is upper than $\pi/6$;

wherein $a$ is equal to the first extension and $ceil$ is the ceiling function.

11. Method according to the claim 10 wherein the fifth determination step (105) is also configured;
to select cells of the new broadcast area as cells, to which a center $(x, y)$ of the coverage area respects the following formula:

$$\frac{(x - cx)^2}{a^2} + \frac{(y - cy)^2}{b^2} \leq 1$$

wherein $cx$ and $cy$ are coordinates of the center of the ellipse, $a$ is the major axis of the ellipse and $b$ is the minor axis of the ellipse and x and y are the coordinates of the center of the coverage area of the cell.

12. System for updating a broadcast area containing a plurality of cells and serving a plurality of user equipments, the user equipments being organized within a plurality of groups, the system comprising:

a first determination module (601) configured to determine a principal direction depending of directions of the user equipments of a group,
a second determination module (602) configured to determine a dispersion depending of the directions of the user equipments of the group and of the principal direction,
a third determination module (603) configured to determine a center, depending of positions of the user equipments of the group,
a fourth determination module (604) configured to determine a geographical area;

the geographical area being centered on the center and
the geographical area having a first extension, along the principal direction, this first extension depending of the speeds of the user equipments of the group and

the geographical area having a second extension, along a direction perpendicular to the principal direction, this second extension depending of the dispersion and the speeds of the user equipments of the group,

the system also comprising a fifth determination module (605) configured to determine a new broadcast area, as being coverage areas of cells overlapping the geographical area.

13. A computer-readable medium having embodied thereon a method for updating a broadcast area containing a plurality of cells and serving a plurality of user equipments, the user equipments being organized within a plurality of groups, the method comprising:

a first step (101) of determining a principal direction depending of directions of the user equipments of a group,
a second step (102) of determining a dispersion depending of the directions of the user equipments of the group and of the princial direction,
a third step (103) of determining a center, depending of positions of the user equipments of the group,
a fourth step (104) of determining a geographical area;

the geographical area being centered on the center and
the geographical area having a first extension, along the principal direction, this first extension depending of the speeds of the user equipments of the group and
the geographical area having a second extension, along a direction perpendicular to the principal direction, this second extension depending of the dispersion and the speeds of the user equipments of the group,

the method also comprising a fifth step (105) of determining a new broadcast area, as being coverage areas of cells overlapping the geographical area.

**Patentansprüche**

1. Verfahren zum Bestimmen mindestens eines neuen Sendegebiets, wobei das neue Sendegebiet eine Vielzahl von Zellen umfasst und eine Vielzahl von Teilnehmergeräten bedient, wobei die Teilnehmergeräte innerhalb einer Vielzahl von Gruppen organisiert sind, wobei das Verfahren die folgenden Schritte umfasst, die für mindestens eine der Gruppen durchgeführt werden:

einen ersten Schritt (101) zum Bestimmen einer Hauptrichtung in Abhängigkeit von den Richtungen der Teilnehmergeräte der Gruppe,
einen zweiten Schritt (102) zum Bestimmen einer Dispersion der Richtungen in Abhängigkeit von den Richtungen der Teilnehmergeräte der Gruppe und der Hauptrichtung,
einen dritten Schritt (103) zum Bestimmen eines Zentrums in Abhängigkeit der Positionen der Teilnehmergeräte der Gruppe,
einen vierten Schritt (104) zum Bestimmen eines geografischen Gebiets;

wobei das geografische Gebiet im Zentrum zentriert ist und
wobei das geografische Gebiet eine erste Ausdehnung entlang der Hauptrichtung aufweist, wobei diese erste Ausdehnung abhängt von den Geschwindigkeiten der Teilnehmergeräte der Gruppe und
wobei das geografische Gebiet eine zweite Ausdehnung entlang einer Richtung aufweist, die rechtwinklig zur Hauptrichtung ist, wobei diese zweite Ausdehnung abhängt von der Dispersion und den Geschwindigkeiten der Teilnehmergeräte der Gruppe,

wobei das Verfahren außerdem einen fünften Schritt (105) zum Bestimmen des neuen Sendegebiets umfasst als Abdeckungsbereiche von Zellen, die das geografische Gebiet überlappen.

2. Verfahren nach Anspruch 1, ebenfalls umfassend zwei Startschritte:

einen Schritt (201) zum Klassifizieren der Teilnehmergeräte gemäß ihrer Geschwindigkeit innerhalb einer Vielzahl von Geschwindigkeitsklassen, wobei jede Geschwindigkeitsklasse verbunden ist mit einem Bereich von Geschwindigkeiten und die Teilnehmergeräte enthält, deren Verschiebungsgeschwindigkeit innerhalb des Bereichs von Geschwindigkeiten liegt,
einen Schritt (202) zum Klassifizieren der Teilnehmergeräte gemäß ihrer Richtung innerhalb einer Vielzahl von Richtungsklassen, wobei jede Richtungsklasse verbunden ist mit einem Bereich von Richtungen und die Teilnehmergeräte enthält, deren Verschiebungsrichtung innerhalb des Bereichs von Richtungen liegt,

wobei jede Gruppe verbunden ist mit einem Paar, das bestimmt ist durch eine Geschwindigkeitsklasse und eine Richtungsklasse, und wobei die Teilnehmergeräte einer Gruppe die Teilnehmergeräte sind, die innerhalb der verbundenen Geschwindigkeitsklasse und Richtungsklasse klassifiziert sind.

3. Verfahren nach Anspruch 2, wobei die Schritte von Anspruch 1 durchgeführt werden für mindestens zwei Gruppen, welche die mit zwei unterschiedlichen Paaren verbunden sind, die bestimmt sind durch eine der Geschwindigkeitsklassen und der Richtungsklassen, wobei das Verfahren ebenfalls einen Schritt (301) zum Verschmelzen von mindesten zwei neuen Sendegebieten in ein verschmolzenes Sendegebiet umfasst.

4. Verfahren nach Anspruch 2 oder 3 wobei der Schritt der Geschwindigkeitsklassifizierung (201) ebenfalls umfasst;

einen Schritt (401-a) zum Bestimmen von mindestens einer Geschwindigkeitsklasse einer Anzahl von Teilnehmergeräten der Geschwindigkeitsklasse
und einen Schritt (402-a) zum Auswählen der Geschwindigkeitsklassen, die mehr Teilnehmergeräte enthalten als ein erster Schwellenwert.

5. Verfahren nach Anspruch 2 oder 3 oder 4, wobei der Schritt der Richtungsklassifizierung (202) ebenfalls umfasst;

einen Schritt (401-b) zum Bestimmen von mindestens einer Richtungsklasse einer Anzahl von Teilnehmergeräten der Richtungsklasse;
und einen Schritt (402-b) zum Auswählen der Richtungsklassen, die mehr Teilnehmergeräte enthalten als ein zweiter Schwellenwert.

6. Verfahren nach Anspruch 3 oder 4 oder 5, wobei der Schritt des Verschmelzens (301) außerdem konfiguriert ist

zum Bestimmen von Zellen der zwei neuen Sendegebiete und
zum Bestimmen des verschmolzenen Sendegebiets, das die Zellen der zwei neuen Sendegebiete enthält.

7. Verfahren nach einem beliebigen der vorhergehenden Ansprüche, wobei der erste Bestimmungsschritt (101) ebenfalls konfiguriert ist;

zum Bestimmen der Hauptrichtung als Median der Richtungen der Teilnehmergerät der Gruppe oder
zum Bestimmen der Hauptrichtung als Mittelwert der Richtungen der Teilnehmergeräte der Gruppe oder
zum Bestimmen der Hauptrichtung als Mittelwert einer minimalen Richtung der Teilnehmergeräte der Gruppe und einer maximalen Richtung der Teilnehmergeräte der Gruppe oder
zum Klassifizieren der Teilnehmergeräte der Gruppe innerhalb einer Menge von Untergruppen und zum Verwenden der folgenden Gleichung;

$$theta\_i_{principal} = \sum_{j \in group} \frac{number\ of\ users\ in\ sub\ group\ j}{Total\ of\ users} theta\_j$$

In dieser Gleichung stellt $theta\_i_{principal}$ die Hauptrichtung der Gruppe $i$ dar, $j$ eine der Untergruppen der Gruppe $i$, *number of users in sub group j* stellt die Anzahl von Teilnehmern der Untergruppe $j$ dar, *Total of users* stellt die Gesamtzahl der Teilnehmer dar, die von dem neuen Sendegebiet bedient werden und $theta_j$ stellt die mittlere Richtung der Teilnehmer der Untergruppe $j$ dar.

8. Verfahren nach einem beliebigen der vorhergehenden Ansprüche, wobei;
der zweite Bestimmungsschritt (102) ebenfalls konfiguriert ist zum Bestimmen der Dispersion als Varianz der Richtung der Richtungen der Teilnehmergeräte der Gruppe im Vergleich zur Hauptrichtung.

9. Verfahren nach einem beliebigen der vorhergehenden Ansprüche, wobei;
der dritte Bestimmungsschritt (103) ebenfalls konfiguriert ist zum Bestimmen des Zentrums als Schwerpunkt von Positionen der Teilnehmergeräte der Gruppe.

10. Verfahren nach einem beliebigen der vorhergehenden Ansprüche, wobei;

> der vierte Bestimmungsschritt (104) ebenfalls konfiguriert ist zum Bestimmen des geografischen Gebiets, das eine Ellipse bildet;
> diese Ellipse im Zentrum zentriert ist, die erste Ausdehnung eine Hauptachse der Ellipse darstellt und die zweite Ausdehnung eine Nebenachse der Ellipse darstellt und
> wobei die erste Ausdehnung;

>> gleich ist dem Durchmesser der Abdeckung von 4 Zellen, wenn die Geschwindigkeit der Teilnehmergeräte geringer ist als 20 km/h,
>> gleich ist dem Durchmesser der Abdeckung von 8 Zellen, wenn die Geschwindigkeit der Teilnehmergeräte zwischen 20 km/h und 40 km/h liegt,
>> gleich ist dem Durchmesser der Abdeckung von 16 Zellen, wenn die Geschwindigkeit der Teilnehmergeräte zwischen 40 km/h und 60 km/h liegt,
>> gleich ist dem Durchmesser der Abdeckung von 32 Zellen, wenn die Geschwindigkeit der Teilnehmergeräte zwischen 60km/h und 80 km/h liegt,
>> gleich ist dem Durchmesser der Abdeckung von 32 Zellen, wenn die Geschwindigkeit der Teilnehmergeräte höher als 80km/h ist

> mit der zweiten Ausdehnung;

>> gleich oder zwei Mal dem Zelldurchmesser ist, wenn die Dispersion kleiner ist als $\pi/3$
>> gleich der ersten Ausdehnung ist, wenn die Dispersion im Bereich von $\pi/3$ und $\pi/4$ liegt;
>> gleich $ceil(a/2)$ Mal dem Zelldurchmesser ist, wenn die Dispersion innerhalb des Bereichs von $\pi/4$ und $\pi/6$ liegt

> gleich $ceil(a/3)$ Mal dem Zelldurchmesser ist, wenn die Dispersion größer ist als $\pi/6$
> wobei a gleich der ersten Ausdehnung und $ceil$ die Deckenfunktion ist.

11. Verfahren nach Anspruch 10, wobei der fünfte Bestimmungsschritt (105) ebenfalls konfiguriert ist;
zum Auswählen des neuen Sendegebiets als Zellen, zu denen ein Zentrum $(x, y)$ des Abdeckungsbereichs die folgende Formel erfüllt:

$$\frac{(x - cx)^2}{a^2} + \frac{(y - cy)^2}{b^2} \leq 1$$

wobei $cx$ und $cy$ Koordinaten des Zentrums der Ellipse sind, a die Hauptachse der Ellipse und $b$ die Nebenachse der Ellipse und $x$ und $y$ Koordinaten des Zentrums des Abdeckungsbereichs der Zelle sind.

12. System zum Aktualisieren eines Sendebereichs, der eine Vielzahl von Zellen enthält und eine Vielzahl von Teilnehmergeräten bedient, wobei die Teilnehmergeräte organisiert sind innerhalb einer Vielzahl von Gruppen und das System umfasst:

> ein erstes Bestimmungsmodul (601), das konfiguriert ist zum Bestimmen einer Hauptrichtung in Abhängigkeit von Richtungen der Teilnehmergeräte einer Gruppe,
> ein zweites Bestimmungsmodul (602), das konfiguriert ist zum Bestimmen einer Dispersion in Abhängigkeit von den Richtungen der Teilnehmergeräte der Gruppe und der Hauptrichtung,
> ein drittes Bestimmungsmodul (603), das konfiguriert ist zum Bestimmen eines Zentrums in Abhängigkeit der Positionen der Teilnehmergeräte der Gruppe,
> ein viertes Bestimmungsmodul (604), das konfiguriert ist zum Bestimmen eines geografischen Bereichs;

>> wobei das geografische Gebiet zentriert ist auf dem Zentrum und das
>> geografische Gebiet eine erste Ausdehnung entlang der Hauptrichtung aufweist, wobei diese erste Ausdehnung abhängt von den Geschwindigkeiten der Teilnehmergeräte der Gruppe und
>> wobei das geografische Gebiet eine zweite Ausdehnung aufweist, die rechtwinklig zur Hauptrichtung ist, wobei diese zweite Ausdehnung abhängt von der Dispersion und den Geschwindigkeiten der Teilnehmergeräte der Gruppe,

wobei das System ebenfalls umfasst ein fünftes Bestimmungsmodul (605), das konfiguriert ist zum Bestimmen eines neuen Sendegebiets als Abdeckungsbereiche von Zellen, die das geografische Gebiet überlappen.

13. Ein computerlesbares Mittel mit einem eingebetteten Verfahren zum Aktualisieren eines Sendebereichs, der eine Vielzahl von Zellen enthält und eine Vielzahl von Teilnehmergeräten bedient, wobei die Teilnehmergeräte organisiert sind innerhalb einer Vielzahl von Gruppen und das System umfasst:

einen ersten Schritt (101) zum Bestimmen einer Hauptrichtung in Abhängigkeit der Richtungen der Teilnehmergeräte einer Gruppe,
einen zweiten Schritt (102) zum Bestimmen einer Dispersion in Abhängigkeit der Richtungen der Teilnehmergeräte der Gruppe und der Hauptrichtung,
einen dritten Schritt (103) zum Bestimmen eines Zentrums in Abhängigkeit von Positionen der Teilnehmergeräte der Gruppe,
einen vierten Schritt (104) zum Bestimmen eines geografischen Gebiets;

wobei das geografische Gebiet zentriert ist auf dem Zentrum und
das geografische Gebiet eine erste Ausdehnung entlang der Hauptrichtung aufweist, wobei diese erste Ausdehnung abhängt von den Geschwindigkeiten der Teilnehmergeräte der Gruppe und
wobei das geografische Gebiet eine zweite Ausdehnung aufweist, die rechtwinklig zur Hauptrichtung ist, wobei diese zweite Ausdehnung abhängt von der Dispersion und den Geschwindigkeiten der Teilnehmergeräte der Gruppe,

wobei das Verfahren ebenfalls umfasst einen fünften Schritt (105) zum Bestimmen eines neuen Sendegebiets als Abdeckungsbereiche von Zellen, die das geografische Gebiet überlappen.

## Revendications

1. Procédé pour déterminer au moins une nouvelle zone de diffusion, la nouvelle zone de diffusion contenant une pluralité de cellules et desservant une pluralité d'équipements utilisateurs, les équipements utilisateurs étant organisés dans une pluralité de groupes, le procédé comprenant les étapes suivantes réalisées pour au moins un des groupes

une première étape (101) de détermination d'une direction principale en fonction de directions des équipements utilisateurs du groupe,
une deuxième étape (102) de détermination d'une dispersion des directions, en fonction des directions des équipements utilisateurs du groupe et de la direction principale,
une troisième étape (103) de détermination d'un centre, en fonction de positions des équipements utilisateurs du groupe,
une quatrième étape (104) de détermination d'une zone géographique ;

la zone géographique étant centrée sur le centre et
la zone géographique ayant une première extension, le long de la direction principale, cette première extension dépendant des vitesses des équipements utilisateurs du groupe et
la zone géographique ayant une deuxième extension, le long d'une direction perpendiculaire à la direction principale, cette deuxième extension dépendant de la dispersion et des vitesses des équipements utilisateurs du groupe,

le procédé comprenant également une cinquième étape (105) de détermination de la nouvelle zone de diffusion, comme étant des zones de couverture de cellules chevauchant la zone géographique.

2. Procédé selon la revendication 1 comprenant également deux étapes initiales ;

une étape (201) de classification des équipements utilisateurs en fonction de leur vitesse dans une pluralité de classes de vitesse, chaque classe de vitesse étant associée à une plage de vitesses et contenant les équipements utilisateurs ayant une vitesse de déplacement dans la plage de vitesses,
une étape (202) de classification des équipements utilisateurs en fonction de leur direction dans une pluralité de classes de direction, chaque classe de direction étant associée à une plage de directions et contenant les équipements utilisateurs ayant une direction de déplacement dans la plage de directions,

dans lequel chaque groupe est associé à une paire constituée d'une classe de vitesse et d'une classe de direction et les équipements utilisateurs d'un groupe sont les équipements utilisateurs classés dans la classe de vitesse et la classe de direction associées.

3. Procédé selon la revendication 2 dans lequel les étapes selon la revendication 1 sont réalisées pour au moins deux groupes associés à deux paires différentes constituées d'une des classes de vitesse et des classes de direction, le procédé comprenant également une étape (301) de fusion d'au moins deux nouvelles zones de diffusion dans une zone de diffusion fusionnée.

4. Procédé selon la revendication 2 ou 3 dans lequel l'étape de classification de vitesse (201) comprend également ;

une étape (401-a) de détermination pour au moins une classe de vitesse d'un nombre d'équipements utilisateurs de la classe de vitesse,
et une étape (402-a) de sélection des classes de vitesse contenant davantage d'équipements utilisateurs qu'un premier seuil.

5. Procédé selon la revendication 2 ou 3 ou 4 dans lequel l'étape de classification de direction (202) comprend également ;

une étape (401-b) de détermination, pour au moins une classe de direction d'un nombre d'équipements utilisateurs de la classe de direction ;
et une étape (402-b) de sélection des classes de direction contenant davantage d'équipements utilisateurs qu'un deuxième seuil.

6. Procédé selon la revendication 3 ou 4 ou 5 dans lequel l'étape de fusion (301) est également configurée

pour déterminer des cellules des deux nouvelles zones de diffusion et
pour déterminer la zone de diffusion fusionnée comme une zone de diffusion contenant les cellules des deux nouvelles zones de diffusion.

7. Procédé selon l'une quelconque des revendications précédentes dans lequel la première étape de détermination (101) est également configurée ;

pour déterminer la direction principale comme étant une valeur médiane des directions des équipements utilisateurs du groupe ou,
pour déterminer la direction principale comme étant une moyenne des directions des équipements utilisateurs du groupe ou,
pour déterminer la direction principale comme étant une moyenne d'une direction minimale des équipements utilisateurs du groupe et d'une direction maximale des équipements utilisateurs du groupe ou
pour classer les équipements utilisateurs du groupe dans un ensemble de sous-groupes et pour utiliser l'équation suivante ;

$$theta\_i_{principal} = \sum_{j \in group} \frac{number\ of\ users\ in\ sub\ group\ j}{Total\ of\ users} theta\_j$$

Dans cette équation, *theta_iprincipal* représente la direction principale du groupe *i, j* représente un des sous-groupes du groupe *i, number of users in sub group j* représente le nombre d'utilisateurs du sous-groupe *j, Total of users* représente le nombre total d'utilisateurs desservis par la nouvelle zone de diffusion, et *theta_j* représente la direction moyenne des utilisateurs du sous-groupe *j*.

8. Procédé selon l'une quelconque des revendications précédentes dans lequel ;
la deuxième étape de détermination (102) est également configurée pour déterminer la dispersion comme étant la variance de la direction des directions des équipements utilisateurs du groupe par rapport à la direction principale.

**9.** Procédé selon l'une quelconque des revendications précédentes dans lequel ;
la troisième étape de détermination (103) est également configurée pour déterminer le centre comme étant le centroïde des positions des équipements utilisateurs du groupe.

**10.** Procédé selon l'une quelconque des revendications précédentes dans lequel ;

la quatrième étape de détermination (104) est aussi configurée pour déterminer la zone géographique formant une ellipse ;
cette ellipse est centrée sur le centre, la première extension représentant un axe majeur de l'ellipse et la deuxième extension représentant un axe majeur de l'ellipse et
la première extension ;

étant égale au diamètre de la couverture de 4 cellules si la vitesse des équipements utilisateurs est inférieure à 20 km/h,
étant égale au diamètre de la couverture de 8 cellules si la vitesse des équipements utilisateurs est comprise entre 20 km/h et 40 km/h,
étant égale au diamètre de la couverture de 16 cellules si la vitesse des équipements utilisateurs est comprise entre 40 km/h et 60 km/h,
étant égale au diamètre de la couverture de 32 cellules si la vitesse des équipements utilisateurs est comprise entre 60 km/h et 80 km/h,
étant égale au diamètre de la couverture de 32 cellules si la vitesse des équipements utilisateurs est supérieure à 80 km/h

la deuxième extension ;

étant égale à deux fois le diamètre de cellule si la dispersion est inférieure à $\pi/3$
étant égale à la première extension si la dispersion est dans la plage comprise entre $\pi/3$ et $\pi/4$ ;
étant égale à *ceil*(*a*/2) fois le diamètre de cellule, si la dispersion est dans la plage comprise entre $\pi/4$ et $\pi/6$
étant égale à *ceil(*a*/3)* fois le diamètre de cellule si la dispersion est supérieure à $\pi/6$ ;

dans lequel a est égal à la première extension et *ceil* est la fonction plafond.

**11.** Procédé selon la revendication 10 dans lequel la cinquième étape de détermination (105) est aussi configurée ;
pour sélectionner des cellules de la nouvelle zone de diffusion en tant que cellules, dans lesquelles un centre (*x, y*) de la zone de couverture respecte la formule suivante :

$$(x-cx)^2 / _{a^2} + (y-cy)^2 / _{b^2} \le 1$$

dans laquelle *cx* et *cy* sont des coordonnées du centre de l'ellipse, *a* est l'axe majeur de l'ellipse et b est l'axe mineur de l'ellipse et x et y sont les coordonnées du centre de la zone de couverture de la cellule.

**12.** Système pour actualiser une zone de diffusion contenant une pluralité de cellules et desservant une pluralité d'équipements utilisateurs, les équipements utilisateurs étant organisés dans une pluralité de groupes, le système comprenant :

un premier module de détermination (601) configuré pour déterminer une direction principale en fonction de directions des équipements utilisateurs d'un groupe,
un deuxième module de détermination (602) configuré pour déterminer une dispersion en fonction des directions des équipements utilisateurs du groupe et de la direction principale,
un troisième module de détermination (603) configuré pour déterminer un centre, en fonction de positions des équipements utilisateurs du groupe,
un quatrième module de détermination (604) configuré pour déterminer une zone géographique ;

la zone géographique étant centrée sur le centre et
la zone géographique ayant une première extension, le long de la direction principale, cette première extension dépendant des vitesses des équipements utilisateurs du groupe et

la zone géographique ayant une deuxième extension, le long d'une direction perpendiculaire à la direction principale, cette deuxième extension dépendant de la dispersion et des vitesses des équipements utilisateurs du groupe,

le système comprenant également un cinquième module de détermination (605) configuré pour déterminer une nouvelle zone de diffusion, comme étant des zones de couverture de cellules chevauchant la zone géographique.

13. Support lisible par ordinateur intégrant un procédé pour actualiser une zone de diffusion contenant une pluralité de cellules et desservant une pluralité d'équipements utilisateurs, les équipements utilisateurs étant organisés dans une pluralité de groupes, le procédé comprenant :

une première étape (101) de détermination d'une direction principale en fonction de directions des équipements utilisateurs d'un groupe,
une deuxième étape (102) de détermination d'une dispersion en fonction des directions des équipements utilisateurs du groupe et de la direction principale,
une troisième étape (103) de détermination d'un centre, en fonction de positions des équipements utilisateurs du groupe,
une quatrième étape (104) de détermination d'une zone géographique ;

la zone géographique étant centrée sur le centre et
la zone géographique ayant une première extension, le long de la direction principale, cette première extension dépendant des vitesses des équipements utilisateurs du groupe et
la zone géographique ayant une deuxième extension, le long d'une direction perpendiculaire à la direction principale, cette deuxième extension dépendant de la dispersion et des vitesses des équipements utilisateurs du groupe,

le procédé comprenant également une cinquième étape (105) de détermination d'une nouvelle zone de diffusion, comme étant des zones de couverture de cellules chevauchant la zone géographique.

101 Determination principal direction

102 Determination dispersion

103 Determination center

104 Determination geographycal area

105 Determination new broadcasting area

Figure 1

201 Classification by speed

202 Classification by direction

101 Determination first direction

102 Determination dispersion

103 Determination center

104 Determination geographycal area

105 Determination new broadcasting area

Figure 2

Figure 3

401-a — Determination number of UE per speed classes

402-a — Selection of speed classes

Figure 4-a

401-b — Determination number of UE per direction

402-b — Selection of direction classes

Figure 4-b

Figure 5

601 — Determination principal direction

602 — Determination dispersion

603 — Determination center

604 — Determination geographycal area

605 — Determination new broadcasting area

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008141305 A1

### Non-patent literature cited in the description

- *IEEE Transactions On Wireless Communications,* January 2009, 8
- **ZAJIC, A.G.** Estimation of Mobile Velocities and Direction of Movement in Mobile-to-Mobile Wireless Fading Channels. *IEEE Transactions on Vehicular Technology,* vol. 61 (1), 130-139
- **S. OMAR ; C. RIZOS S.** Incorporating GPS into Wireless Networks: Issues and Challenges. *6th International Symposium on Satellite Navigation Technology Including Mobile Positioning & Location Services,* 2003
- **FREDRIK GUSTAFSSON ; FREDRIK GUNNARSSON.** Positioning using time-difference of arrival measurements. *IEEE International Conference on Acoustics, Speech, and Signal Processing, 2003. Proceedings. (ICASSP '03)*
- Wavelet analysis for velocity characterization in mobile networks. **SALAH-EDDINE ELAYOUBI ; AFEF BEN HADJ ALAYA-FEKI ; EMMANUELLE VILLEBRUN ; BENOÎT FOURESTIÉ.** Presented during VTC. Spring, 2006, 793-797
- Mobile speed estimation for broadband wireless communications over rician fading channels. **ROSA ZHENG YAHONG ; XIAO CHENGSHAN.** IEEE Transactions On Wireless Communications. January 2009, 8